# EUROPEAN PATENT APPLICATION

(11) **EP 4 657 607 A1**
(43) Date of publication of application: **03.12.2025**
(21) Application number: 25171870.6
(22) Date of filing: 23.04.2025
(51) Int. Cl.: H01M 10/613, B60L 50/64, H01M 10/625, H01M 10/6556, H01M 10/6557, H01M 50/242, H01M 50/249, H01M 50/258, H01M 50/262

(54) **POWER STORAGE DEVICE FOR VEHICLE AND POWER STORAGE DEVICE INSTALLATION STRUCTURE**

(30) Priority: 29.05.2024 JP 2024087478
(71) Applicant: TOYOTA JIDOSHA KABUSHIKI KAISHA, Toyota-shi, Aichi-ken, 471-8571 (JP)
(72) Inventor: MORIOKI, Takuya, Toyota-shi, 471-8571 (JP)
(74) Representative: TBK

(57) **Abstract**

A power storage device 10 for a vehicle of a first aspect includes: a battery module group 37 structured by a plurality of battery modules 36, in which a plurality of battery cells are accommodated, being disposed along one direction; and a mounting bracket 40 extending in the one direction, connecting the plurality of battery modules 37, and fixed to a beam-shaped member 28 extending in the one direction.

## Description

### BACKGROUND

### Technical Field

The present disclosure relates to a power storage device for a vehicle and a power storage device installation structure.

### Related Art

Japanese Patent Application Laid-Open (JP-A) No. 2020-064815 discloses a power storage device in which plural power storage units (battery modules) are disposed within a battery case. In the power storage device disclosed in JP-A No. 2020-064815, plural beam members (beam-shaped members) are disposed in a battery case, and the power storage units are fastened by bolts to the beam members via plural second members provided at the power storage units.

However, in the structure disclosed in JP-A No. 2020-064815, the second members for fastening the power storage units to the beam-shaped members are scattered at the side walls of the power storage units. Therefore, in cases such as at the time of a collision of the vehicle, the collision load cannot be borne by the second members, and there is the possibility that the beam-shaped members will buckle.

### SUMMARY

In view of the above-described circumstances, an object of the present disclosure is to provide a power storage device for a vehicle and a power storage device installation structure that can improve the battery module protecting performance.

A power storage device for a vehicle of a first aspect includes: a battery module group structured by a plurality of battery modules, in which a plurality of battery cells are accommodated, being disposed along one direction; and a mounting bracket extending in the one direction, connecting the plurality of battery modules, and fixed to a beam-shaped member extending in the one direction.

In the power storage device for a vehicle of the first aspect, plural battery cells are accommodated in a battery module, and a battery module group is structured by plural battery modules being disposed along one direction. The battery modules that structure the battery module group are fixed via the mounting bracket to the beam-shaped member that extends in the one direction. Here, the mounting bracket connects the plural battery modules and extends in the one direction. Due thereto, for example, at the time when collision load is inputted in the one direction at the time of a collision of the vehicle, the collision load can be borne by both members that are the beam-shaped member and the mounting bracket that extend in the one direction, and therefore, buckling of the beam-shaped member is suppressed. As a result, collision load being inputted to the battery modules can be suppressed.

In a power storage device for a vehicle of a second aspect, in the first aspect, the mounting bracket is formed to be longer than a length, in the one direction, of at least one of the battery modules structuring the battery module group.

In the power storage device for a vehicle of the second aspect, the mounting bracket is longer than the length, in the one direction, of a battery module. Therefore, buckling of the beam-shaped member is suppressed as compared with a structure in which the length of the mounting bracket is shorter than that of the battery modules.

In a power storage device for a vehicle of a third aspect, in the first aspect, the mounting bracket is formed to be longer than a length, in the one direction, of the battery module group.

In the power storage device for a vehicle of the third aspect, the length of the mounting bracket is longer than that of the battery module group that is structured by the plural battery modules being disposed. Therefore, the beam-shaped member is reinforced by the mounting bracket over the entirety of the battery module group.

In a power storage device for a vehicle of a fourth aspect, in the third aspect, in a state in which the plural battery modules are connected, both end portions of the mounting bracket project out in the one direction further than the battery module group.

In the power storage device for a vehicle of the fourth aspect, the both end portions of the mounting bracket project out in the one direction further than the battery module group. Therefore, when load is inputted in the one direction, the load is inputted to the mounting bracket before the battery modules. Thus, input of load to the battery modules is suppressed.

In a power storage device for a vehicle of a fifth aspect, in the first aspect, the mounting bracket is fixed to an upper surface of the beam-shaped member.

In the power storage device for a vehicle of the fifth aspect, the mounting bracket is fixed to the upper surface of the beam-shaped member. Due thereto, the load transmission path of the collision load is dispersed up and down at the beam-shaped member and the mounting bracket.

In a power storage device for a vehicle of a sixth aspect, in the first aspect, the battery module groups are stacked in a vehicle vertical direction, and a battery module group at a vehicle upper side and the battery module group at a vehicle lower side are connected via the mounting bracket.

In the power storage device for a vehicle of the sixth aspect, due to the battery modules being connected in the vertical direction by the mounting bracket that is for fixing to the beam-shaped member, a large number of battery modules can be connected without increasing the number of parts.

In a power storage device for a vehicle of a seventh aspect, in the sixth aspect, a heat dissipating panel is interposed between the battery module group at the vehicle upper side and the battery module group at the vehicle lower side.

In the power storage device for a vehicle of the seventh aspect, an increase in temperature of the battery modules is suppressed due to heat of the battery modules being absorbed by the heat dissipating panel.

A power storage device installation structure of an eighth aspect includes: the power storage device for a vehicle of any one of the first aspect through the seventh aspect; and a beam-shaped member extending in a vehicle transverse direction and spanning between frame members, wherein the mounting bracket extends in the vehicle transverse direction and is fixed to the beam-shaped member, and in a state in which the plurality of battery modules are connected by the mounting bracket, the beam-shaped member projects out in the vehicle transverse direction further than the battery module group.

In the power storage device installation structure of the eighth aspect, the beam-shaped member extends in the vehicle transverse direction and spans between frame members. Further, because the beam-shaped member projects out in the vehicle transverse direction further than the battery module group, when load is inputted to a side surface of the vehicle, the load is inputted to the beam-shaped member before the battery module group. Therefore, inputting of load to the battery module group is suppressed.

A power storage device installation structure of a ninth aspect includes, in the eighth aspect, rockers extending in a vehicle longitudinal direction at both vehicle transverse direction sides, wherein the beam-shaped member and the mounting bracket overlap with the rockers as seen from the vehicle transverse direction.

In the power storage device installation structure of the ninth aspect, the collision load inputted to a rocker at the time of a side collision of the vehicle is transmitted to both members that are the beam-shaped member and the mounting bracket.

In a power storage device installation structure of a tenth aspect, in the ninth aspect, impact absorbing members are provided further toward vehicle transverse direction outer sides than the rockers, and, as seen from the vehicle transverse direction, the impact absorbing members overlap with an entirety of the beam-shaped member and a lower portion of the mounting bracket.

In the power storage device installation structure of the tenth aspect, a portion of the collision load inputted at the time of a side collision is absorbed by the impact absorbing member. As seen from the vehicle transverse direction, the impact absorbing members overlap the entirety of the beam-shaped member and the lower portion of the mounting bracket. Due thereto, load that could not be completely absorbed by the impact absorbing member is dispersed to both members that are the beam-shaped member and the mounting bracket. Here, breakage of the mounting bracket is suppressed due to the beam-shaped member, which spans between the frame members, bearing more of the load.

A power storage device installation structure of an eleventh aspect includes, in the eighth aspect, a longitudinal reinforcement positioned between the battery modules and extending in a vehicle longitudinal direction, wherein the mounting bracket is fixed to the beam-shaped member and the longitudinal reinforcement.

In the power storage device installation structure of the eleventh aspect, the mounting bracket is fixed to the beam-shaped member and the longitudinal reinforcement. Therefore, load inputted to the mounting bracket is dispersed in the vehicle longitudinal direction via the beam-shaped member and the longitudinal reinforcement. Due thereto, buckling of the beam-shaped member and the mounting bracket can be suppressed.

In a power storage device installation structure of a twelfth aspect, in the eighth aspect, the battery module groups are disposed in a vehicle longitudinal direction with the beam-shaped member disposed therebetween, and the battery module group at a vehicle front side and the battery module group at a vehicle rear side are respectively fixed to the beam-shaped member via the mounting brackets.

In the power storage device installation structure of the twelfth aspect, a battery module group is disposed at the front of and at the rear of the beam-shaped member, and each battery module group is fixed to the beam-shaped member by a mounting bracket. Due thereto, two of the mounting brackets are fixed to the beam-shaped member, and buckling of the beam-shaped member is suppressed as compared with a structure in which one mounting bracket is fixed thereto.

As described above, in accordance with the power storage device for a vehicle and power storage device installation structure relating to the present disclosure, the battery module protecting performance can be improved.

### BRIEF DESCRIPTION OF THE DRAWINGS

An exemplary embodiment of the present disclosure will be described in detail based on the following figures, wherein:
Fig. 1 is a perspective view illustrating main portions of a vehicle equipped with a power storage device for a vehicle relating to an embodiment;
Fig. 2 is an exploded perspective view of the power storage device for a vehicle relating to the embodiment;
Fig. 3 is a plan view of the power storage device for a vehicle relating to the embodiment;
Fig. 4 is an enlarged perspective view of main portions in which main portions of the power storage device for a vehicle relating to the embodiment are enlarged;
Fig. 5 is a perspective view illustrating battery module groups and a mounting bracket in the embodiment; and
Fig. 6 is a cross-sectional view illustrating the state cut along line 6-6 of Fig. 2.

### DETAILED DESCRIPTION

A power storage device 10 for a vehicle and an installation structure of a power storage device relating to an embodiment are described with reference to the drawings. Note that arrow UP, arrow FR and arrow RH that are illustrated appropriately in the respective drawings indicate the upward direction in the vehicle vertical direction, the frontward direction in the vehicle longitudinal direction and the rightward direction in the vehicle left-right direction (vehicle transverse direction), respectively, of a vehicle V in which the power storage device 10 for a vehicle is installed. Further, in cases in which merely vertical, longitudinal and left-right directions are used in the following description, they refer to the vertical of the vehicle vertical direction, the longitudinal of the vehicle longitudinal direction, and the left and right of the vehicle left-right direction (the vehicle transverse direction), respectively, unless otherwise indicated.

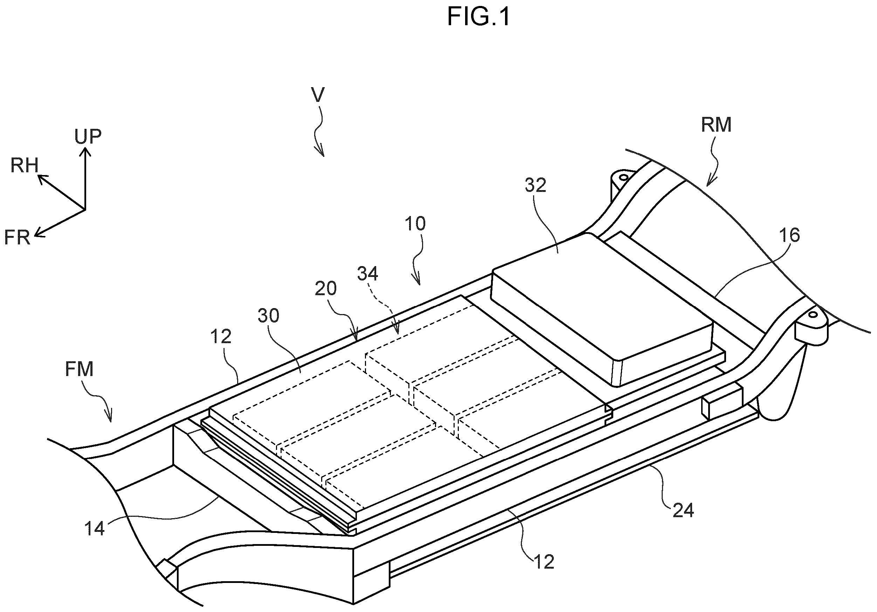

Fig. 1 is a perspective view illustrating main portions of the vehicle V equipped with the power storage device 10 for a vehicle relating to the embodiment. As illustrated in Fig. 1, a pair of left and right rockers 12 are provided at the vehicle longitudinal direction central portion of the vehicle V. The rockers 12 extend in the vehicle longitudinal direction at both sides in the vehicle transverse direction, and structure frame members having closed cross-sectional structures.

The front end portions of the rockers 12 are connected by a front cross member 14 extending in the vehicle transverse direction. The rear end portions of the rockers 12 are connected by a rear cross member 16 extending in the vehicle transverse direction. Therefore, the longitudinal direction central portion of the vehicle V is formed substantially in the shape of a rectangular frame as seen in a plan view, by the rockers 12, the front cross member 14 and the rear cross member 16.

A front module FM structuring a power unit chamber is provided further toward the vehicle front side than the rockers 12. A rear module RM structuring the rear portion of the vehicle V is provided further toward the vehicle rear side than the rockers 12. Detailed description of the front module FM and the rear module RM is omitted. Note that the front module FM and the rear module RM respectively may be formed by welding plural frame members, or portions of the frames thereof may be formed integrally by casting or the like.

Here, the power storage device 10 for a vehicle is provided within the frame formed by the rockers 12, the front cross member 14 and the rear cross member 16. The power storage device 10 for a vehicle is structured so as to be able to store electric power to be supplied to a motor that is the drive source of the vehicle V. Note that the vehicle V in the present embodiment is a battery electric vehicle (BEV) that travels by motive force generated at a power unit, or a fuel cell electric vehicle (FCEV), a hybrid electric vehicle (HEV), a plug-in hybrid electric vehicle (PHEV) or the like.

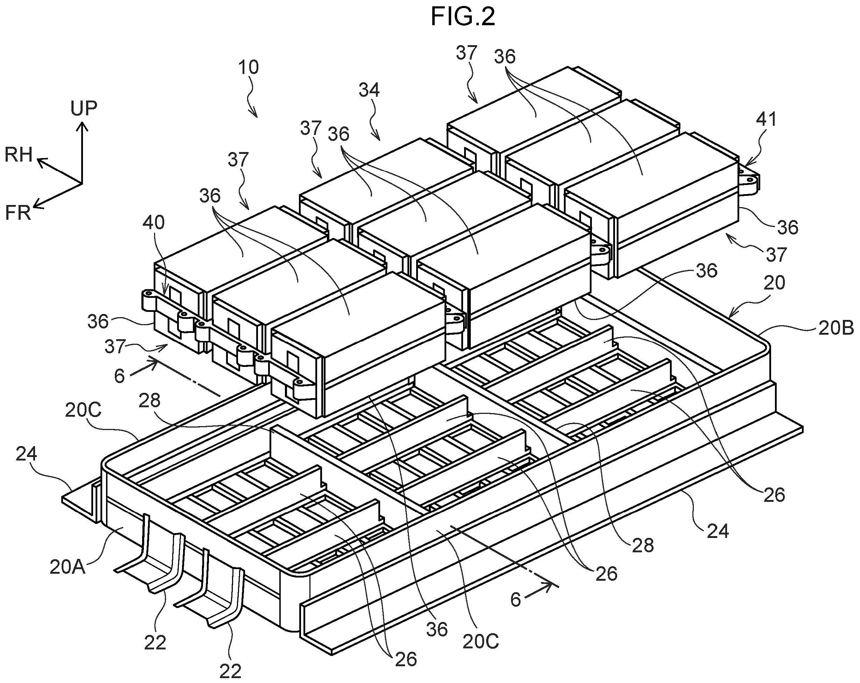

Fig. 2 is an exploded perspective view of the power storage device 10 for a vehicle relating to the embodiment. As an example, the power storage device 10 for a vehicle of the present embodiment has a battery case 20. The battery case 20 is a box-shaped member formed in a substantially rectangular shape as seen in a plan view, and is structured to include a front wall portion 20A extending in the vehicle transverse direction at the vehicle front side, a rear wall portion 20B extending in the vehicle transverse direction at the vehicle rear side, and a pair of side wall portions 20C longitudinally connecting the both end portions of the front wall portion 20A and the rear wall portion 20B.

Two cross-member-side brackets 22 are provided at the front surface of the front wall portion 20A with an interval therebetween the vehicle transverse direction. Each of the cross-member-side brackets 22 is formed in a substantial L shape as seen from the vehicle transverse direction, and the portions thereof extending the vehicle vertical direction are fixed to the front wall portion 20A. The portions, which extend in the vehicle longitudinal direction, of the cross-member-side brackets 22 are fixed to the lower surface of the front cross member 14 (see Fig. 1).

Rocker-side brackets 24 are provided at the side wall portions 20C of the battery case 20. The rocker-side brackets 24 are formed to around the same lengths as the side wall portions 20C, and extend in the vehicle longitudinal direction, and are formed in substantial L shapes as seen from the vehicle longitudinal direction. The vertically-extending portions of the rocker-side brackets 24 are fixed to the side wall portions 20C. The portions, which extend in the vehicle transverse direction, of the rocker-side brackets 24 are fixed to the lower surfaces of the rockers 12 (see Fig. 1).

Here, plural longitudinal reinforcements 26 extending in the vehicle longitudinal direction, and plural lateral reinforcements 28 serving as beam-shaped members and extending in the vehicle transverse direction (the one direction), are provided at the bottom wall of the battery case 20.

Two of the longitudinal reinforcements 26 are provided at the front portion of the battery case 20 with an interval therebetween in the vehicle transverse direction. Two of the longitudinal reinforcements 26 are provided at the rear portion of the battery case 20 with an interval therebetween in the vehicle transverse direction. Further, two of the longitudinal reinforcements 26 are provided also at the vehicle longitudinal direction central portion of the battery case 20 with an interval therebetween in the vehicle transverse direction. These longitudinal reinforcements 26 are positioned between battery modules 36 that are adjacent in the vehicle transverse direction. The battery modules 36 are described later.

The lateral reinforcements 28 are provided at positions that divide the battery case 20 into three equal portions in the vehicle longitudinal direction. Specifically, the lateral reinforcement 28 disposed at the front side is provided between the longitudinal reinforcements 26 at the front portion and the longitudinal reinforcements 26 at the central portion. Further, the lateral reinforcement 28 disposed at the rear side is provided between the longitudinal reinforcements 26 at the central portion and the longitudinal reinforcements 26 at the rear portion. The two lateral reinforcements 28 are formed such that the vehicle vertical direction lengths thereof are longer than those of the longitudinal reinforcements 26.

As illustrated in Fig. 1, the battery case 20 has a cover 30, and a battery pack 34 is accommodated at the interior of the battery case 20. Equipment 32 are provided at the upper surface of the cover 30, at the rear portion of the battery case 20. The equipment 32 include, for example, an ECU (Electronic Control Unit), a BMS (Battery Management System), and a JB (Junction Box).

As illustrated in Fig. 2, the battery pack 34 is structured to include the plural battery modules 36. In the present embodiment, as an example, the battery pack 34 is structured to include 18 of the battery modules 36. Each of the battery modules 36 has been made into a module in a state in which plural cells are stacked therein.

Six of the battery modules 36 are accommodated in the region surrounded by the front wall portion 20A, the lateral reinforcement 28 at the front side and the side wall portions 20C of the battery case 20. Further, six of the battery modules 36 are accommodated in the region surrounded by the front and rear lateral reinforcements 28 and the side wall portions 20C. Moreover, six of the battery modules 36 are accommodated in the region surrounded by the rear wall portion 20B, the lateral reinforcement 28 at the rear side and the side wall portions 20C. In this way, the battery modules 36 are disposed at the both front and rear sides of the lateral reinforcements 28 with the lateral reinforcements 28 disposed therebetween.

Here, the plural battery modules 36 are connected in the vehicle transverse direction by a front side mounting bracket 40 and a rear side mounting bracket 41. Specifically, a battery module group 37 is structured by three of the battery modules 36 that are disposed along the vehicle transverse direction being connected in the vehicle transverse direction by the front side mounting bracket 40 and the rear side mounting bracket 41.

The front side mounting bracket 40 is mounted to the front ends of the battery modules 36, and the rear side mounting bracket 41 is mounted to the rear ends of the battery modules 36. Further, the battery modules 36 that are disposed vertically are connected by the front side mounting bracket 40 and the rear side mounting bracket 41. Namely, there is a structure in which the battery module group 37 at the upper side and the battery module group 37 at the lower side are connected by the front side mounting bracket 40 and the rear side mounting bracket 41.

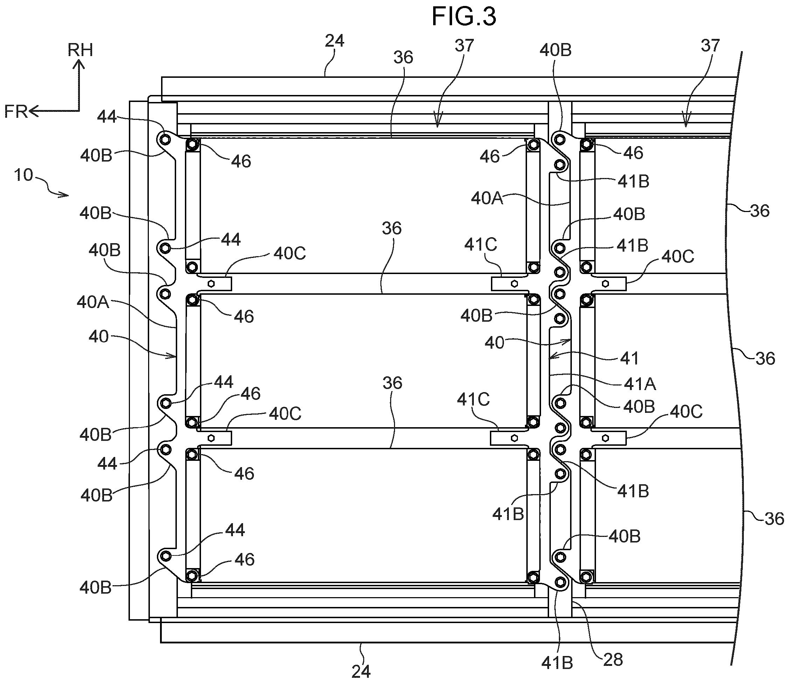

Fig. 3 is a plan view of the power storage device 10 for a vehicle relating to the embodiment. As illustrated in Fig. 3, the front side mounting bracket 40 is mounted to the front ends of the battery modules 36, and the rear side mounting bracket 41 is mounted to the rear ends of the battery modules 36.

Here, the battery module groups 37 are disposed so as to be adjacent to one another in the vehicle longitudinal direction with the lateral reinforcements 28 disposed therebetween. The front side mounting bracket 40 of the battery modules 36 disposed at the rear side and the rear side mounting bracket 41 of the battery modules 36 disposed at the front side are fixed to the lateral reinforcements 28.

In the present embodiment, as an example, the front side mounting bracket 40 and the rear side mounting bracket 41 are formed to be the same shape. The rear side mounting bracket 41 is the front side mounting bracket 40 that has been turned around by 180° as seen in plan view and mounted to the battery modules 36.

The front side mounting bracket 40 is structured to include a base portion 40A, load transmitting portions 40B and longitudinal fixing portions 40C. The rear side mounting bracket 41 is structured to include a base portion 41A, load transmitting portions 41B and longitudinal fixing portions 41C.

The base portion 40A of the front side mounting bracket 40 extends in the vehicle transverse direction. The plural load transmitting portions 40B project out toward the vehicle front side from the base portion 40A. In the present embodiment, as an example, six of the load transmitting portions 40B are provided at the front side mounting bracket 40. The load transmitting portions 40B are disposed at an interval along the vehicle transverse direction, and, in the present embodiment, as an example, the load transmitting portions 40B are provided at positions corresponding to the corner portions of the battery modules 36.

The longitudinal fixing portions 40C are provided between the battery modules 36 at the right side and the battery modules 36 at the central side, and between the battery modules 36 at the left side and the battery modules 36 at the central side, respectively, and extend toward the vehicle rear side from the base portion 40A. The longitudinal fixing portions 40C are fastened to the longitudinal reinforcements 26 by unillustrated bolts.

The base portion 41A of the rear side mounting bracket 41 extends in the vehicle transverse direction. The plural load transmitting portions 41B project out toward the vehicle rear side from the base portion 41A. In the present embodiment, as an example, six of the load transmitting portions 41B are provided at the rear side mounting bracket 41. The load transmitting portions 41B are disposed at an interval along the vehicle transverse direction, and, in the present embodiment, as an example, the load transmitting portions 41B are provided at positions corresponding to the corner portions of the battery modules 36. Further, the load transmitting portions 41B are disposed alternately with the load transmitting portions 40B of the front side mounting bracket 40.

The longitudinal fixing portions 41C are provided between the battery modules 36 at the right side and the battery modules 36 at the central side, and between the battery modules 36 at the left side and the battery modules 36 at the central side, respectively, and extend toward the vehicle front side from the base portion 41A. The longitudinal fixing portions 41C are fastened to the longitudinal reinforcements 26 by unillustrated bolts.

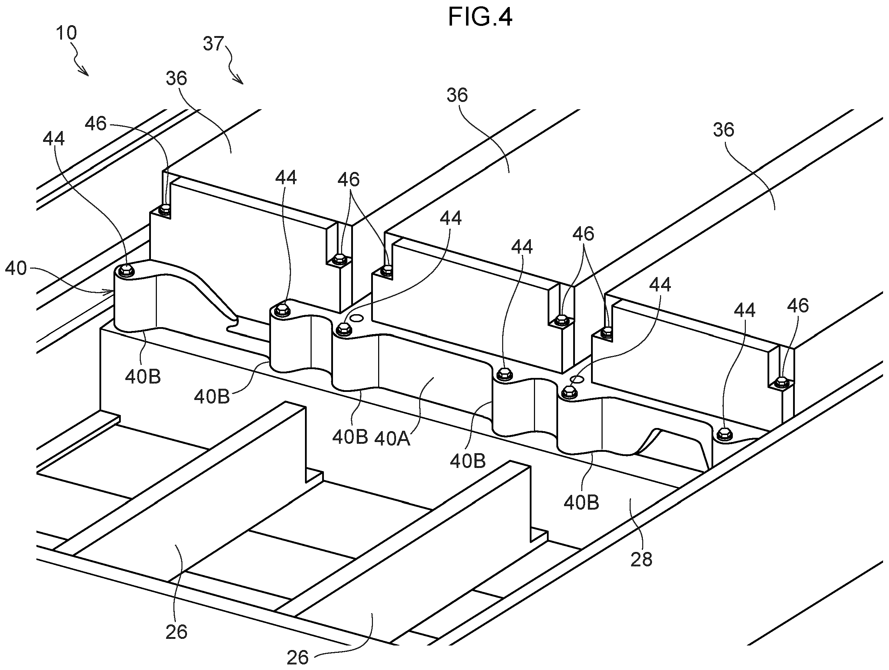

Fig. 4 is an enlarged perspective view of main portions in which main portions of the power storage device 10 for a vehicle relating to the embodiment are enlarged. As illustrated in Fig. 4, bolts 44 are inserted from the vehicle upper side through the load transmitting portions 40B of the front side mounting bracket 40, and the load transmitting portions 40B are fixed to the lateral reinforcement 28 by these bolts 44. Further, the bolts 44 are inserted from the vehicle upper side through the load transmitting portions 41B of the rear side mounting bracket 41, and the load transmitting portions 41B are fixed to the lateral reinforcement 28 by these bolts 44 (see Fig. 3).

Here, bolts 46 are inserted through the corner portions at the front sides of the battery modules 36 at the upper side. The battery modules 36 at the upper side are fastened to the front side mounting bracket 40 due to these bolts 46 being screwed into the base portion 40A.

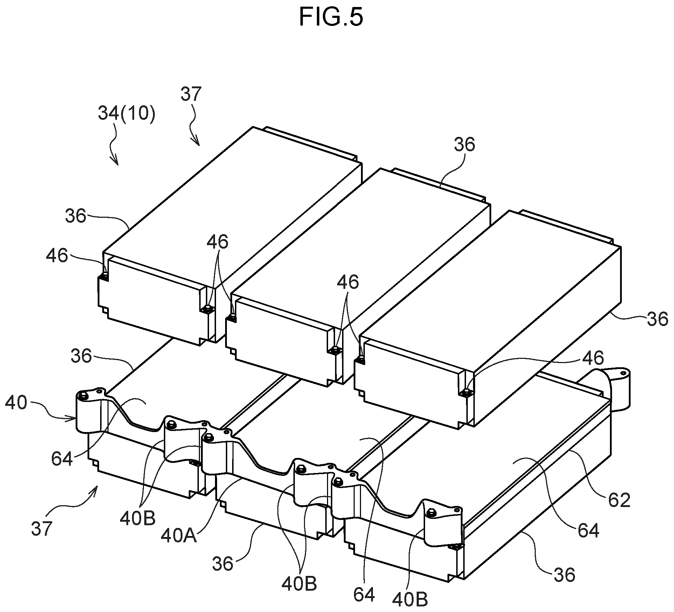

Fig. 5 is a perspective view illustrating the battery module groups 37 and the front side mounting bracket 40 in the present embodiment. As illustrated in Fig. 5, in the same way as the battery module group 37 at the upper side, at the battery module group 37 disposed at the lower side, unillustrated bolts are inserted through the four corners of the battery modules 36, and the battery module group 37 at the lower side is fastened to the front side mounting bracket 40 due to the bolts being screwed into the base portion 40A from beneath.

Here, a heat dissipating panel 62 that can absorb heat of the battery modules 36 is interposed between the battery module group 37 at the vehicle upper side and the battery module group 37 at the vehicle lower side. The heat dissipating panel 62 is formed in a substantially rectangular shape as seen in plan view. The vehicle longitudinal direction length of the heat dissipating panel 62 is about the same as the length of the battery modules 36. Further, the vehicle transverse direction length of the heat dissipating panel 62 is about the same as the vehicle transverse direction length of the battery module group 37.

The heat dissipating panel 62 may have coolant flow paths at the interior thereof for example. In this case, the surfaces of the heat dissipating panel 62 can be cooled by forming an unillustrated cooling circuit, which runs through the heat dissipating panel, and circulating a coolant therein. Namely, heat from the battery module groups 37 can be taken away by the heat dissipating panel 62.

Three adhesive layers 64 are formed on the upper surface of the heat dissipating panel 62. The respective adhesive layers 64 are formed at positions corresponding to the battery modules 36, and the battery modules 36 are adhered to these adhesive layers 64 from the vehicle upper side. Note that the adhesive layers 64 may be made to be sizes of around the same extent as the surface areas of the bottoms of the battery modules 36, or may be made to be smaller than the surface areas of the bottoms of the battery modules 36. Further, adhesive layers that are similar to those of the upper surface are formed at the lower surface of the heat dissipating panel 62, and the battery modules 36 at the vehicle lower side are adhered via the adhesive layers. Namely, in the present embodiment, the battery module groups 37 that are layered vertically are connected vertically via the bolts 46 and the heat dissipating panel 62.

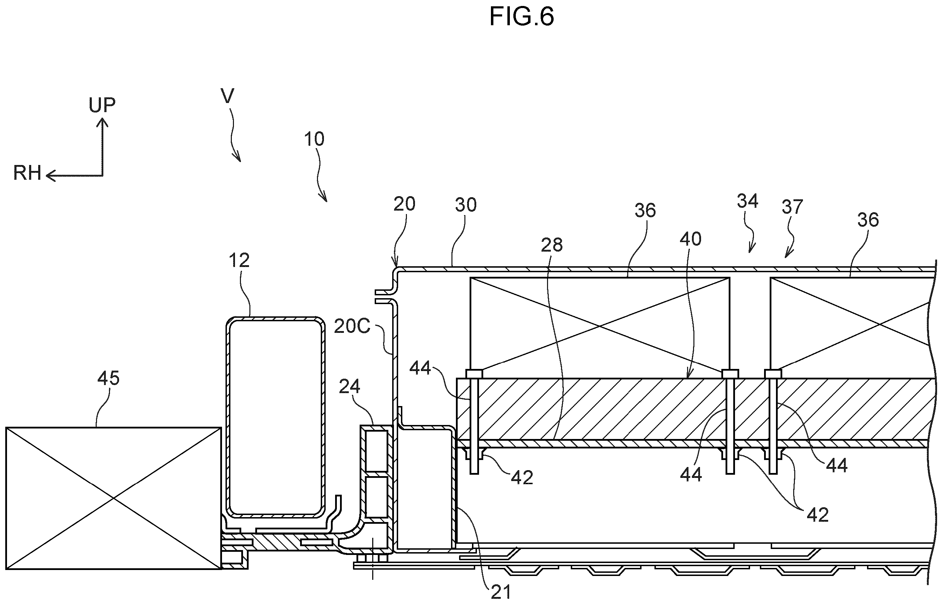

Fig. 6 is a cross-sectional view illustrating the state cut along line 6-6 of Fig. 2. As illustrated in Fig. 6, the lateral reinforcement 28 spans between the rockers 12, and the vehicle transverse direction length of the lateral reinforcement 28 is formed to be longer than that of the battery module group 37.

Reinforcing portions 21 that are substantially L-shaped in cross-section are provided within the battery case 20. The reinforcing portions 21 extend in the vehicle longitudinal direction, and are joined to the bottom portion of the battery case 20 and the side wall portions 20C. Closed cross-sections are structured by the bottom portion of the battery case 20, the side wall portions 20C and the reinforcing portions 21. Note that, although only the reinforcing portion 21 at the vehicle right side is illustrated in Fig. 6, a similar reinforcing portion is provided at the vehicle left side as well.

The lateral reinforcement 28 spans between the reinforcing portions 21. Namely, the right side end portion of the lateral reinforcement 28 is joined to the reinforcing portion 21 at the right side, and the left side end portion of the lateral reinforcement 28 is joined to the reinforcing portion at the left side.

Further, the both end portions of the lateral reinforcement 28 project out in the vehicle transverse direction further than the battery module groups 37. Specifically, the right end portion of the lateral reinforcement 28 extends further to the vehicle right side than the battery module groups 37. Further, although not illustrated, in the same way as the right end portion, the left end portion of the lateral reinforcement 28 extends further to the vehicle left side than the battery module groups 37.

Weld nuts 42 are provided at the interior of the lateral reinforcement 28, and the bolts 44 serving as fasteners are screwed together with the weld nuts 42. The bolts 44 are inserted through the front side mounting bracket 40 from the vehicle upper side and pass through the front side mounting bracket 40 and are screwed together with the weld nuts 42. In this way, the front side mounting bracket 40 is fixed to the upper surface of the lateral reinforcement 28. Further, although not illustrated, the rear side mounting bracket 41 is similarly fastened to the lateral reinforcement 28 by bolts and weld nuts.

The front side mounting bracket 40 is formed to be longer in the vehicle transverse direction than the battery module groups 37. The right side end portion of the front side mounting bracket 40 is positioned further toward the right side than the rightmost battery modules 36. Further, although not illustrated, the left side end portion of the front side mounting bracket 40 is positioned further toward the left side than the leftmost battery modules 36. Therefore, the front side mounting bracket 40 is a structure that projects out further in the vehicle transverse direction than the battery pack 34.

An impact absorbing member 45 is disposed further toward the vehicle transverse direction outer side than the rocker 12. Although illustration of the cross-section thereof is omitted, the impact absorbing member 45 is a shape that is partitioned into plural interior spaces so as to, at the time of input of collision load, deform and be able to absorb the collision load. Further, the impact absorbing member 45 is adjacent to the rocker 12 and extends in the vehicle longitudinal direction, and the upper surface of the impact absorbing member 45 is set at a position that is higher than the lateral reinforcement 28.

Here, the lateral reinforcement 28 and the front side mounting bracket 40 overlap the rocker 12 as seen from the vehicle transverse direction. Further, as seen from the vehicle transverse direction, the impact absorbing member 45 overlaps the entirety of the lateral reinforcement 28 and the lower portion of the front side mounting bracket 40.

### (Operation)

Operation of the power storage device 10 for a vehicle and power storage device installation structure relating to the present embodiment is described next.

In the power storage device 10 for a vehicle and power storage device installation structure relating to the present embodiment, as illustrated in Fig. 2, plural battery cells are accommodated in the battery module 36, and the battery module groups 37 are structured by a plurality of these battery modules 36 being disposed along one direction. Further, as illustrated in Fig. 3, the battery modules 36 that structure the battery module group 37 are fixed to the lateral reinforcement 28, which extends in the one direction, via the front side mounting bracket 40 and the rear side mounting bracket 41.

Here, the front side mounting bracket 40 and the rear side mounting bracket 41 connect the plural battery modules 36 and extend in the vehicle transverse direction. Due thereto, when collision load is inputted in the vehicle transverse direction at the time of a collision of the vehicle for example, the collision load can be borne by both the lateral reinforcement 28 and the mounting brackets (the front side mounting bracket 40, the rear side mounting bracket 41). Therefore, buckling of the lateral reinforcement 28 is suppressed. As a result, the collision load being inputted to the battery modules 36 can be suppressed.

In particular, in the present embodiment, the battery module groups 37 are disposed at the front and the rear of the lateral reinforcement 28, and the respective battery module groups 37 are fixed to the lateral reinforcement 28 by the mounting brackets (the front side mounting bracket 40, the rear side mounting bracket 41). Due thereto, the two mounting brackets that are the front side mounting bracket 40 and the rear side mounting bracket 41 are fixed to the lateral reinforcement 28, and buckling of the lateral reinforcement 28 is suppressed as compared with a structure in which one mounting bracket is fixed thereto. Further, in the present embodiment, the load transmitting portions 40B of the front side mounting bracket 40 and the load transmitting portions 41B of the rear side mounting bracket 41 are disposed alternately along the vehicle transverse direction. Therefore, at the time when collision load is inputted in the vehicle transverse direction, the load transmitting portions 40B and the load transmitting portions 41B contact one another, and the collision load can be borne by the both members that are the front side mounting bracket 40 and the rear side mounting bracket 41.

Further, in the present embodiment, as illustrated in Fig. 6, the lateral reinforcement 28 extends in the vehicle transverse direction and spans between the rockers 12. Because the lateral reinforcement 28 projects out in the vehicle transverse direction further than the battery module groups 37, at the time of input of load to a side surface of the vehicle, the load is inputted to the lateral reinforcement 28 before the battery module groups 37, and therefore, input of load to the battery module groups 37 is suppressed.

Further, the front side mounting bracket 40 and the rear side mounting bracket 41 of the present embodiment are longer than the battery module group 37. Therefore, the lateral reinforcement 28 is reinforced by the mounting brackets over the entirety of the battery module group 37. As a result, buckling of the lateral reinforcement 28 can be suppressed more effectively as compared with a structure in which the lengths of the front side mounting bracket 40 and the rear side mounting bracket 41are shorter than that of the battery module 36 and a structure in which the lengths of the front side mounting bracket 40 and the rear side mounting bracket 41 are shorter than that of the battery module group 37.

Moreover, in the present embodiment, the both end portions of the front side mounting bracket 40 and the rear side mounting bracket 41 project out in the vehicle transverse direction further than the battery module groups 37. Therefore, when load is inputted in the vehicle transverse direction, the load is inputted to the front side mounting bracket 40 and the rear side mounting bracket 41 before the battery modules 36, and therefore, input of load to the battery modules 36 is suppressed.

Still further, in the present embodiment, the front side mounting bracket 40 and the rear side mounting bracket 41 are fixed to the upper surface of the lateral reinforcement 28. Due thereto, the load transmission path of the collision load is dispersed up and down at the lateral reinforcement 28, and the front side mounting bracket 40 and the rear side mounting bracket 41. Further, a wider installation space for the battery modules 36 can be ensured as compared with a structure in which the front side mounting bracket 40 and the rear side mounting bracket 41 are fixed to the front and the rear of the lateral reinforcement 28.

In the present embodiment, the battery modules 36 are connected in the vertical direction by the front side mounting bracket 40 and the rear side mounting bracket 41 that are for fixing the battery modules 36 to the lateral reinforcement 28. Due thereto, a larger number of the battery modules 36 can be connected without increasing the number of parts. Namely, there is no need to prepare a bracket or the like that is exclusively used for connecting the battery modules 36.

Further, in the present embodiment, the collision load inputted to the rocker 12 at the time of a side collision of the vehicle V is transmitted to both members that are the lateral reinforcement 28 and the front side mounting bracket 40. Similarly, at the rear portion of the battery modules 36, the collision load that is inputted to the rocker 12 at the time of a side collision of the vehicle V is transmitted to the both members that are the lateral reinforcement 28 and the rear side mounting bracket 41.

Moreover, in the present embodiment, a portion of the collision load that is inputted at the time of a side collision is absorbed by the impact absorbing member 45. As seen from the vehicle transverse direction, the impact absorbing member 45 overlaps the entirety of the lateral reinforcement 28 and the lower portions of the mounting brackets (the front side mounting bracket 40, the rear side mounting bracket 41). Due thereto, the load that could not be completely absorbed by the impact absorbing member 45 is dispersed to both the lateral reinforcement 28 and the mounting brackets. Here, breakage of the mounting brackets is suppressed due to the lateral reinforcement 28, which spans between the rockers 12, bearing more of the load.

Still further, in the present embodiment, as illustrated in Fig. 5, the heat dissipating panel 62 is provided between the battery module group 37 at the upper side and the battery module group 37 at the lower side. Therefore, an increase in the temperatures of the battery modules 36 is suppressed due to heat of the battery modules 36 being absorbed by this heat dissipating panel 62.

In the present embodiment, as illustrated in Fig. 3, the front side mounting bracket 40 has the longitudinal fixing portions 40C, and the longitudinal fixing portions 40C are fastened to the longitudinal reinforcements 26 by unillustrated bolts. Due thereto, load that is inputted to the front side mounting bracket 40 is dispersed in the vehicle longitudinal direction via the lateral reinforcement 28 and the longitudinal reinforcements 26. Buckling of the lateral reinforcement 28 and the front side mounting bracket 40 can thereby be suppressed.

Further, due to the lateral reinforcement 28 and the longitudinal reinforcements 26 being connected by the front side mounting bracket 40, the bottom portion of the battery case 20 is reinforced, and the strength with respect to vibrations from the road surface side can be improved.

Although the power storage device 10 for a vehicle relating to the embodiment and modified examples has been described above, the present disclosure is not limited to the above and, of course, can be implemented in various forms within a scope that does not depart from the gist thereof. For example, although the above-described embodiment is structured such that two of the battery modules 36 are connected vertically as illustrated in Fig. 5, the present disclosure is not limited to this. Further, although the above-described embodiment is structured such that three of the battery modules 36 are connected left and right, the present disclosure is not limited to this.

Further, as illustrated in Fig. 3, in the above-described embodiment, the front side mounting bracket 40 and the rear side mounting bracket 41 are each formed by a single part that extends in the vehicle transverse direction. However, the present disclosure is not limited to this, and, for example, the mounting bracket may be structured by mechanically connecting plural parts.

Moreover, in the above-described embodiment, the front side mounting bracket 40 and the rear side mounting bracket 41 are mounted to the lateral reinforcement 28 that extends in the vehicle transverse direction, but the present disclosure is not limited to this. For example, mounting brackets that extend in the vehicle longitudinal direction may be prepared, and the mounting brackets may be mounted to the longitudinal reinforcements. In this case, the load transmitting portions are disposed at an interval in the vehicle longitudinal direction, and falling-out of the battery modules is suppressed due to the load transmitting portions contacting one another at the time of a front collision or the time of a rear collision of the vehicle.

The following notes are disclosed in relation to the above-described embodiment.

### (Note 1)

A power storage device for a vehicle, having:
a battery module group structured by plural battery modules, in which plural battery cells are accommodated, being disposed along one direction; and
a mounting bracket extending in the one direction, and connecting the plural battery modules, and fixed to a beam-shaped member extending in the one direction.

### (Note 2)

The power storage device for a vehicle of Note 1, wherein the mounting bracket is formed to be longer than a length, in the one direction, of at least one of the battery modules structuring the battery module group.

### (Note 3)

The power storage device for a vehicle of Note 1 or 2, wherein the mounting bracket is formed to be longer than a length, in the one direction, of the battery module group.

### (Note 4)

The power storage device for a vehicle of any one of Notes 1 through 3, wherein, in a state in which the plural battery modules are connected, both end portions of the mounting bracket project out in the one direction further than the battery module group.

### (Note 5)

The power storage device for a vehicle of any one of Notes 1 through 4, wherein the mounting bracket is fixed to an upper surface of the beam-shaped member.

### (Note 6)

The power storage device for a vehicle of any one of Notes 1 through 5, wherein
the battery module groups are stacked in a vehicle vertical direction, and
the battery module group at a vehicle upper side and the battery module group at a vehicle lower side are connected via the mounting bracket.

### (Note 7)

The power storage device for a vehicle of Note 6, wherein a heat dissipating panel is interposed between the battery module group at the vehicle upper side and the battery module group at the vehicle lower side.

### (Note 8)

A power storage device installation structure, having:
the power storage device for a vehicle of any one of Notes 1 through 7; and
a beam-shaped member extending in a vehicle transverse direction and spanning between frame members,
wherein
the mounting bracket extends in the vehicle transverse direction and is fixed to the beam-shaped member, and
in a state in which the plural battery modules are connected by the mounting bracket, the beam-shaped member projects out in the vehicle transverse direction further than the battery module group.

### (Note 9)

The power storage device installation structure of Note 8, having rockers extending in a vehicle longitudinal direction at vehicle transverse direction both sides,
wherein the beam-shaped member and the mounting bracket overlap the rockers as seen from the vehicle transverse direction.

### (Note 10)

The power storage device installation structure of Note 9, wherein
impact absorbing members are provided further toward vehicle transverse direction outer sides than the rockers, and
as seen from the vehicle transverse direction, the impact absorbing members overlap an entirety of the beam-shaped member and a lower portion of the bracket.

### (Note 11)

The power storage device installation structure of any one of Notes 8 through 10, having a longitudinal reinforcement positioned between the battery modules and extending in a vehicle longitudinal direction,
wherein the mounting bracket is fixed to the beam-shaped member and the longitudinal reinforcement.

### (Note 12)

The power storage device installation structure of any one of Notes 8 through 11, wherein
the battery module groups are disposed in a vehicle longitudinal direction with the beam-shaped member disposed therebetween, and
the battery module group at a vehicle front side and the battery module group at a vehicle rear side are respectively fixed to the beam-shaped member via the mounting brackets.

## Claims

1. A power storage device for a vehicle (10), comprising:
a battery module group (37) structured by a plurality of battery modules (36), in which a plurality of battery cells are accommodated, being disposed along one direction; and
a mounting bracket (40) extending in the one direction, connecting the plurality of battery modules (36), and fixed to a beam-shaped member (28) extending in the one direction.

2. The power storage device for a vehicle of claim 1, wherein the mounting bracket (40) is formed to be longer than a length, in the one direction, of at least one of the battery modules (36) structuring the battery module group (37).

3. The power storage device for a vehicle of claim 1, wherein the mounting bracket (40) is formed to be longer than a length, in the one direction, of the battery module group (37).

4. The power storage device for a vehicle of claim 3, wherein, in a state in which the plurality of battery modules (36) are connected, both end portions of the mounting bracket (40) project out in the one direction further than the battery module group (37).

5. The power storage device for a vehicle of claim 1, wherein the mounting bracket (40) is fixed to an upper surface of the beam-shaped member (28).

6. The power storage device for a vehicle of claim 1, wherein:
battery module groups (37) are stacked in a vehicle vertical direction, and
a battery module group (37) at a vehicle upper side and a battery module group at a vehicle lower side are connected via the mounting bracket (40).

7. The power storage device for a vehicle of claim 6, wherein a heat dissipating panel (62) is interposed between the battery module group (37) at the vehicle upper side and the battery module group at the vehicle lower side.

8. A power storage device installation structure, comprising:
the power storage device for a vehicle of any one of claims 1 through 7; and
a beam-shaped member (28) extending in a vehicle transverse direction and spanning between frame members,
wherein:
the mounting bracket (40) extends in the vehicle transverse direction and is fixed to the beam-shaped member (28), and
in a state in which the plurality of battery modules are connected by the mounting bracket (40), the beam-shaped member projects out in the vehicle transverse direction further than the battery module group (37).

9. The power storage device installation structure of claim 8, comprising rockers (12) extending in a vehicle longitudinal direction at both vehicle transverse direction sides,
wherein the beam-shaped member (28) and the mounting bracket (40) overlap with the rockers (12) as seen from the vehicle transverse direction.

10. The power storage device installation structure of claim 9, wherein:
impact absorbing members (45) are provided further toward vehicle transverse direction outer sides than the rockers (12), and
as seen from the vehicle transverse direction, the impact absorbing members (45) overlap with an entirety of the beam-shaped member (28) and a lower portion of the mounting bracket (40).

11. The power storage device installation structure of claim 8, comprising a longitudinal reinforcement (26) positioned between the battery modules (37) and extending in a vehicle longitudinal direction,
wherein the mounting bracket (40) is fixed to the beam-shaped member and the longitudinal reinforcement (26).

12. The power storage device installation structure of claim 8, wherein:
battery module groups (37) are disposed in a vehicle longitudinal direction with the beam-shaped member (28) disposed therebetween, and
a battery module group (37) at a vehicle front side and a battery module group at a vehicle rear side are respectively fixed to the beam-shaped member (28) via mounting brackets (40).
